# FASCICULE DE BREVET EUROPEEN

(11) **EP 1 553 841 B1**
(45) Date de publication et mention de la délivrance du brevet: **31.05.2006**
(21) Numéro de dépôt: 03772389.7
(22) Date de dépôt: 30.09.2003
(51) Int. Cl.: A21D 8/06, A21D 13/00, A47J 36/02

(54) **PROCEDE DE FABRICATION D'UN PRODUIT ALIMENTAIRE A BASE DE CEREALES, CUIT DANS UN MOULE.**
VERFAHREN ZUR HERSTELLUNG EINES IN EINER FORM GEBACKENEN ZEREALIENLEBENSMITTELS
METHOD FOR MAKING A CEREAL FOOD PRODUCT BAKED IN A MOULD

(30) Priorité: 23.10.2002 FR 0213202
(43) Date de publication de la demande: 20.07.2005
(73) Titulaire: Generale Biscuit, 94150 Rungis (FR)
(72) Inventeur: VETTER, Cécile, F-92170 Vanves (FR); SIRI, Bruno Résidence Orée de Sénart, F-91210 Draveil (FR); LOSTIE, Mathieu, F-92100 Boulogne Billancourt (FR); BRUNNER, Stéphane, F-91200 Athis Mons (FR)
(74) Mandataire: Jacquard, Philippe Jean-Luc
(86) Numéro de dépôt international: PCT/FR2003/002860
(87) Numéro de publication internationale: WO 2004/040985

(56) Documents cités:
- EP-A- 0 901 754
- DE-A- 2 460 830
- DE-U- 29 723 877
- US-A- 5 028 754
- DATABASE WPI Section Ch, Week 198417 Derwent Publications Ltd., London, GB; Class A92, AN 1984-103728 XP002268826 & JP 59 045841 A (TAJIMA HATSUTARO-SH), 14 mars 1984 (1984-03-14)

## Description

La présente invention a pour objet un procédé de fabrication d'un produit alimentaire cuit et levé, à base de céréales, susceptible d'être stocké à température ambiante, procédé dans lequel le produit est cuit dans un emballage formant un moule pour le produit.

On connaît déjà des procédés de fabrication de gâteaux dans des boîtes analogues à des boîtes de conserves ou à des barquettes, dont la cuisson est réalisée au four, ce qui implique pour le four une température de l'ordre de 180°C environ qui permet que le produit atteigne à coeur une température suffisante pour assurer la conservation microbiologique ultérieure du produit.

De tels procédés sont décrits par exemple dans les Brevets des Etats-Unis US 2 845 356 (BATTISTE) et US 4 590 078 (UMINA).

Plus particulièrement, le Brevet US 4 590 078 concerne un procédé de cuisson dans lequel un opercule perforé est disposé à une certaine distance d'un couvercle qui, lors de la cuisson n'est que partiellement engagé avec un bord périphérique de la barquette, et qui est ensuite fermé de manière à obtenir un produit de type conserve. Au cours de la cuisson, la pâte lève jusqu'à venir en contact avec l'opercule perforé dont les ouvertures permettent à la vapeur de s'échapper.

Le procédé décrit dans ce Brevet présente un certain nombre d'inconvénients.

D'une part, Il met en oeuvre à la fois un opercule et un couvercle, ce qui en augmente la complexité et le coût, et constitue en outre une barrière thermique qui obère la montée en température du produit dans le four classique qui est utilisé.

En outre, la pâte une fois levée étant sur toute sa surface supérieure en contact avec l'opercule perforé, la cuisson est confinée et le produit ne peut pas lever aussi bien que si cela se produisait dans un espace libre.

Enfin, le temps de cuisson nécessaire (qui est d'environ 35 minutes dans un four à 180°C) est élevé et nécessite une consommation d'énergie importante.

US 5 028 754 divulgue un procédé de préparation d'un gâteau en utilisant un four à micro-ondes.

La présente invention a pour objet un procédé permettant de remédier à au moins un des inconvénients précités.

L'invention concerne ainsi un procédé de fabrication d'un produit cuit et levé, à base de céréales, susceptible d'être stocké à température ambiante, pendant au moins un mois, procédé dans lequel le produit est cuit dans un emballage formant un moule essentiellement jetable pour le produit, caractérisé en ce qu'il comporte les étapes suivantes :
- disposer une pâte céréalière crue dans un moule en un matériau compatible avec un traitement par micro-ondes ;
- disposer sur le moule un opercule compatible avec un chauffage par micro-ondes et au moins partiellement transparent à un rayonnement infra-rouge, court et/ou moyen, en réalisant une fermeture partielle du moule permettant un passage de vapeur vers l'extérieur du moule ;
- réaliser une cuisson mettant en oeuvre une phase de début de cuisson avec un chauffage micro-ondes éventuellement combiné avec un chauffage par convection et/ou un chauffage infra-rouge court et/ou moyen, une levée de la pâte étant obtenue au cours de cette phase de début de cuisson qui est telle qu'il subsiste en fin de levée un espace entre une face supérieure du pâton levé et une face inférieure de l'opercule, cette phase de début de cuisson étant suivie d'une phase de cuisson comprenant un chauffage par infra-rouge, court et/ou moyen, et/ou un chauffage par convection ;
- refroidir au moins partiellement le produit et réaliser une fermeture étanche du moule.

Le pâton cuit éventuellement fourré présente une activité de l'eau comprise entre 0,82 et 0,87 ou bien entre 0,84 et 0,86 et de préférence entre 0,84 et 0,87.

Selon un mode de réalisation avantageux, la pâte présente des levures de boulangerie actives et elle est pré-étuvée dans le moule partiellement fermé avant ladite cuisson, pour assurer un développement des levures.

Le pâton cuit peut être un produit moelleux par exemple une gênoise, un cake, un cake salé, un muffin, un quatre-quart, un gâteau de Savoie, un gâteau aux carottes ou bien encore un Kugelhopf. Le procédé permet d'utiliser les formulations de pâte connues.

Le moule peut être par exemple en matériau plastique, et avantageusement pour des raisons économiques, en polypropylène. Selon un mode de réalisation préféré, la fermeture partielle du moule est réalisée à l'aide d'au moins une ligne de solidarisation périmétrique de l'opercule à un bord périmétrique du moule, cette ligne de solidarisation présentant au moins une discontinuité.

La fermeture étanche est avantageusement réalisée à l'aide d'au moins une ligne de solidarisation périmétrique continue et fermée, solidarisant l'opercule au dit bord périmétrique du moule.

L'opercule est avantageusement un film formant une barrière à la vapeur d'eau et à l'oxygène qui soit suffisante pour assurer la conservation du produit, et en particulier un film pelable. Ce film peut présenter une épaisseur comprise par exemple entre 40 et 100 microns.

La fermeture étanche est avantageusement réalisée à une température du produit telle que, après refroidissement à la température ambiante, l'opercule peut éventuellement présenter une face externe concave, qui constitue un indicateur de qualité de scellage.

Le produit peut présenter au moins un fourrage d'un type résistant à la cuisson ayant une activité de l'eau après cuisson et stabilisation au plus égale à 0,88.

Une bonne conservation du produit dans le temps peut être obtenue en chauffant le coeur du produit à une température au moins égale à 80°C pendant au moins 2 minutes. Avantageusement, au cours de la cuisson, le coeur du produit est porté à une température en plateau au moins égale à 100°C et de préférence comprise entre 100°C et 110°C . Cette température de plateau peut être maintenue pendant 2 à 10 minutes et de préférence pendant 5 minutes.

Au cours de la cuisson, la flore bactérienne sporulée (Bacillus Sp) présente dans le produit avant cuisson subit avantageusement une réduction de 1,5 à 2 logs, c'est-à-dire que la quantité de bactéries sporulées de type Bacillus est diminuée entre 32 et 100 fois. Les autres bactéries non sporulées et les autres microorganismes sont éliminés.

L'invention concerne également un produit cuit levé à base de céréale susceptible d'être stocké à température ambiante pendant au moins un mois, avantageusement au moins deux mois et de préférence au moins trois mois, caractérisé en ce qu'il est disposé dans un emballage à base d'un matériau plastique compatible avec les micro-ondes, avantageusement du polypropylène, cet emballage formant un moule pour le produit étant fermé par un opercule à base d'un matériau compatible avec les micro-ondes et/ou les infra-rouges, et en ce que le produit cuit présente une activité de l'eau comprise entre 0,82 et 0,87.

La pâte du produit cuit levé présente avantageusement une distribution régulière du rayon des pores jusqu'à 1,5 mm avec un maximum de densité de distribution du rayon des pores vers 0,2 mm.

D'autres caractéristiques et avantages de l'invention apparaîtront mieux à la lecture de la description ci-après, donnée à titre d'exemple non limitatif, en liaison avec les dessins dans lesquels :
- la figure 1 est une représentation schématique d'une ligne de fabrication mettant en oeuvre le procédé selon l'invention ;
- les figures 2a, 2b et 2c sont des représentations en vue de dessus et de côté de trois exemples d'emballages utilisables dans le cadre de la présente invention ;
- et la figure 3 une vue en coupe d'un produit obtenu par le procédé, après refroidissement à la température ambiante.

Le procédé selon l'invention permet de cuire des pâtes céréalières à base d'au moins une céréale dans leur emballage final destiné aux consommateurs et de conserver ces produits céréaliers, en particulier des produits moelleux, pendant plusieurs mois à température ambiante.

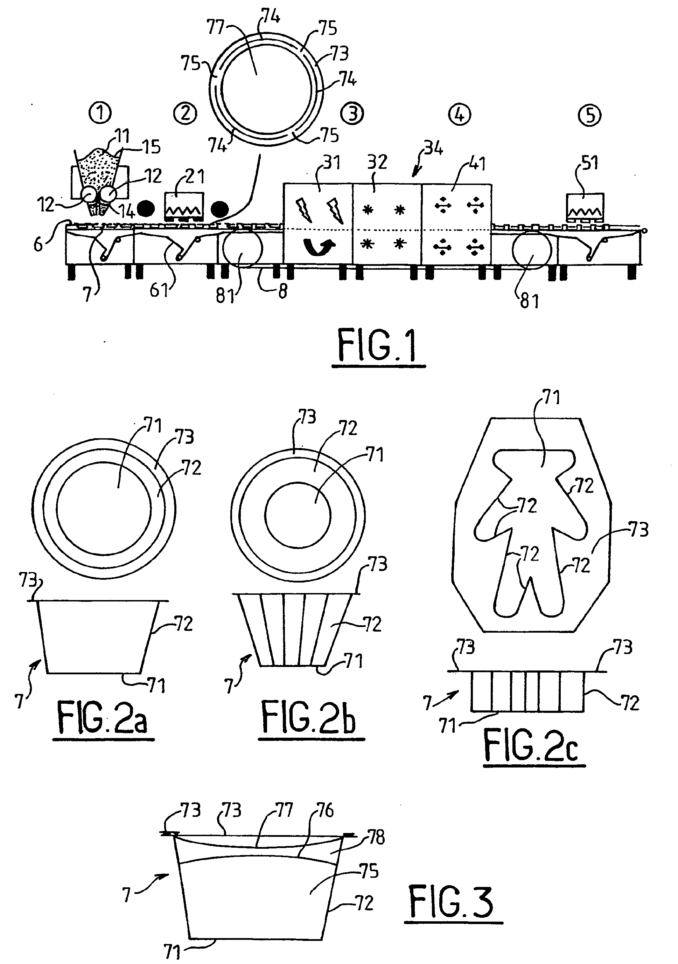

Le procédé peut se décomposer en cinq opérations unitaires présentées sur le schéma de la figure 1.

La première opération référencée 1 consiste à déposer dans un moule 7, en particulier un moule plastique, la pâte, à laquelle a été éventuellement associé un ou plusieurs fourrages. A la figure 1, on a représenté une trémie d'alimentation 15 contenant la pâte 11 qui est délivrée par exemple par des rouleaux 12 à une sortie calibrée 14 pour effectuer le remplissage des moules 7. La pâte pourrait être délivrée par des buses ou par d'autres dispositifs. Le procédé convient particulièrement à des produits individuels de masse unitaire de l'ordre de 30 à 50 grammes, mais il peut bien entendu être mis en oeuvre pour réaliser d'autres types de produits, par exemple des gâteaux au format familial.

Les moules 7 sont choisis en un matériau compatible avec un traitement par les micro-ondes. Ils peuvent être transparents ou teintés. En particulier le polypropylène, qui présente une température de fusion inférieure à 150°C, suffit tout à fait à l'application envisagée, tout en ayant un coût plus bas que les matériaux exigés par les autres procédés.

La deuxième opération réalisée au poste référencé 2 consiste à réaliser une fermeture partielle de l'emballage, destinée à permettre un passage de vapeur vers l'extérieur au cours de la cuisson. Cette opération est par exemple réalisée en déposant un opercule 77 à la surface supérieure 73 de l'emballage formant moule et à réaliser à l'aide d'un poste 21 une soudure périphérique 74 de cet opercule 77, qui présente une ou plusieurs interruptions 75, par exemple comme représenté, trois arcs de cercle ou plus régulièrement répartis sur la circonférence du moule espacés chacun d'un intervalle 75 par exemple de l'ordre de 2 à 10 millimètres. L'opercule 77 est avantageusement réalisé en un film transparent au rayonnement infra-rouge (notamment court et/ou moyen) et compatible avec un traitement par les micro-ondes.

La troisième opération (poste référencé 3) est une cuisson multi-énergies associant un chauffage micro-ondes d'une part et un chauffage infra-rouge et/où un chauffage par convection d'autre part. Le chauffage infra-rouge peut consister en un apport d'infra-rouge par lampe infra-rouge, résistance, panneau rayonnant, etc...

En particulier, le chauffage peut se décomposer en une phase 31 de début de cuisson associant un chauffage par micro-ondes ou un chauffage combiné micro-ondes associant les micro-ondes avec au moins un autre type de chauffage, air chaud (notamment chaleur tournante) et/ou application de rayonnement infra-rouge (court et/ou moyen), et en une phase ultérieure 32 de terminaison de cuisson par un chauffage par rayonnement infra-rouge ou par convection d'air chaud (chaleur tournante) ou bien un chauffage combiné associant la convection d'air chaud (chaleur tournante) et un rayonnement infra-rouge. La durée de chaque phase dépend du type de pâte, de la masse de produit et de la valeur finale recherchée pour l'activité de l'eau ainsi que pour la couleur du produit (dorage).

L'application d'énergie micro-ondes dès le début de la cuisson permet une montée très rapide de la température au coeur du produit. Selon la nature de la pâte, la température au coeur du produit passe de 20°C à 95°C environ dans un délai compris entre 1 et 2 minutes, assurant un développement rapide et important du pâton. L'air chaud autour du moule obtenu éventuellement par la chaleur tournante ou par mise en température du four permet de maintenir la température du produit à une valeur constante pendant tout le temps de la cuisson, et l'application éventuelle d'un rayonnement infra-rouge permet d'apporter un surplus d'énergie nécessaire à la surface du produit pour accélérer son séchage et assurer la coloration de sa surface.

Grâce à la présence de l'opercule 77 pendant toute la durée de la cuisson, le produit est cuit dans une atmosphère modifiée saturée en vapeur d'eau dans l'espace situé entre la face supérieure 76 du produit et la face inférieure de l'opercule 77, si bien qu'on se rapproche d'une cuisson à l'étouffée avec une déperdition faible d'eau pendant la cuisson. Il suffit de calibrer la ou les ouvertures de passage de vapeur d'eau.

La phase suivante désignée par le repère 4 est le refroidissement qui s'opère en sortie de four, par exemple un four tunnel 34. Le refroidissement doit être suffisamment fort pour limiter la dépression dans le moule et éviter la déformation de l'emballage et suffisamment faible pour limiter les risques de post-contamination. Il doit être effectué dans une ambiance suffisamment propre, correspondant à un air filtré de classe 10000 ou meilleur.

L'opération finale réalisée au poste 5 sert à assurer l'étanchéité définitive du produit qui vient d'être refroidi. Par exemple, le produit peut être rendu étanche par un operculage réalisé par un appareillage 51 avec un cordon de soudure continu qui assure l'étanchéité de l'emballage. Ce peut être par exemple le même cordon que le cordon 74 déjà représenté, dont l'étanchéité a été complétée au niveau des interruptions 75, ou bien un autre cordon de soudure.

Le procédé ci-dessus permet de réaliser des produits présentant à l'état cuit une activité de l'eau élevée jusqu'à 0,86 ou même 0,87, ce qui le rend compatible avec l'utilisation de fourrages humides de type préparation de fruits ou fourrages gras et aqueux salés ou sucrés en conservation à température ambiante pendant au moins un mois et avantageusement trois mois, sans utilisation d'additifs antimicrobiens.

Les barèmes de cuisson traditionnels imposeraient au matériau des températures et des durées incompatibles avec les matériaux économiques du type polypropylène qui peuvent être mis en oeuvre selon l'invention. Le produit est pasteurisé et cuit à coeur par micro-ondes. Seule une faction de la chaleur générée dans le produit échauffe l'emballage par conduction, sans endommager le matériau d'emballage.

En outre, l'apport des micro-ondes en début de cuisson favorise la levée du produit, ce qui permet d'obtenir des produits à faible densité et au moelleux remarquable. L'alvéolation est généralement bien formée avec une distribution régulière du rayon des pores jusqu'à 1,5 mm avec un maximum de densité de distribution du rayon des pores vers 0,2 mm.

L'apport des micro-ondes en début de cuisson permet de réduire considérablement la durée de cuisson. Par exemple on peut passer de 20 minutes à 7 minutes et éviter l'utilisation d'épaississants dans la pâte pour limiter la descente des inclusions de type fruits ou « chunks » en cours de cuisson. Ainsi, les inclusions peuvent être mieux distribuées qu'elles ne le sont dans une cuisson traditionnelle à formules égales.

La présente invention est utilisable pour réaliser un grand nombre de produits, et outre ceux déjà cités, par exemple des produits composés d'une pâte au fromage blanc et au citron, ou bien encore des produits composés d'une couche de fourrage avec des morceaux de fruits et d'une pâte de goût vanille. L'invention permet également de réaliser des produits tels que des gâteaux au chocolat, des gâteaux aux amandes, notamment sur lit de pèche, et/ou avec des morceaux de fruits dans la pâte, des génoises, et plus particulièrement des gênoises salées, des cakes notamment des cakes salés au légume et/ou au fromage, ou bien encore des cakes salés présentant un fourrage salé. De tels produits ont en général après cuisson une activité de l'eau comprise entre 0,84 et 0,86, et ne contiennent pas de conservateur chimique ajouté dans la pâte et se conservent pendant plusieurs mois à température ambiante.

Exemple 1 : une génoise grasse à base de pâte chocolatée est réalisée selon l'invention sous forme de produit individuel de masse 35 grammes et présentant une activité de l'eau sensiblement égale à 0,82 selon le barème de cuisson suivant :
- phase 1 (2 mn 30'): micro-ondes 2 kW, air chaud par convection à 130°C, et infra-rouge moyen 6 kW ;
- phase 2 (3 mn 30') : air chaud par convection à 130°C et infra-rouge 6 kW.

Exemple 2 : gênoise grasse avec fourrage pommes (70 % en poids de pâte et 30 % en poids de fourrage) en portions de 50 grammes avec une activité de l'eau finale égale à 0,865.
Phase 1 (1 mn 50') : micro-ondes 1,5 kW. avec air chaud par convection à 125°C et infra-rouge à une puissance de 4,5 kW ;
Phase 2 (4 mn 10') : air chaud par convection à 125°C et infra-rouge à 4,5 kW ;

Exemple 3 : muffin avec fourrage pommes (60 % en poids de pâte et 40 % de fourrage) en portions de 50 grammes avec une activité de l'eau finale de 0,85 ;
Phase 1 : 2 minutes avec des micro-ondes à une puissance de 1,5 kW, air chaud par convection à 130°C et application d'infra-rouge à une puissance de 3,7 kW ;
Phase 2 (11 minutes) air chaud par convection 130°C et rayonnement infra-rouge à une puissance de 3,7 kW.

Exemple 4 : gâteau salé avec fourrage à la tomate (60% en poids de pâte et 40% de fourrage) avec une activité de l'eau finale de 0,86.
Phase 1 : (1 mn 30') : micro-ondes 1,5 kW avec air chaud par convection à 130°C et infra-rouge à 3,8 kW.
Phase 2 : air chaud à 130°C, infra-rouge à 3,8 kW.

Exemple 5 : viennoiserie avec une pâte comprenant 3% de levures de boulangeries actives est disposée dans le moule, puis son opercule est partiellement scellé selon l'invention. Le produit est placé pendant 50 mn dans une chambre de pousse à 30°C et 80% d'humidité relative (étuvage). Une cuisson est ensuite effectuée en 3 phases comprenant :
Phase 1 : (1mn) : micro-ondes avec air chaud par convection à 130°C.
Phase 2 : (7 mn) : air chaud par convection à 130°C.
Phase 3 : (2 mn) : infra-rouge à 3,8 kW.

Les moules 7 contenant le produit sont avantageusement en un matériau scellable, résistant aux infra-rouges et compatible avec les micro-ondes et constituant une barrière suffisante à la vapeur d'eau et à l'oxygène, en vue de la conservation du produit. Un matériau adapté présentant entre autre un avantage économique est le polypropylène, par exemple un polypropylène blanc, un polypropylène transparent ou un polypropylène coloré mono ou bicolore.

L'opercule est avantageusement un film d'operculage scellé sur le moule en polypropylène. Il doit constituer une barrière à la vapeur d'eau et à l'oxygène. Il doit être avantageusement pelable. Il doit être transparent aux infra-rouges et aux micro-ondes. Par exemple on peut utiliser un film associant (de l'extérieur vers l'intérieur) une couche de 12 microns de PET/un adhésif/une couche de 15 microns d'OPEA/un adhésif/du polypropylène pelable d'épaisseur 60 microns. Un autre exemple met en oeuvre un composite associant une couche externe de 15 microns d'OPEA/un adhésif/une couche de polypropylène pelable par rupture d'épaisseur 50 microns. Selon un autre exemple le film présente une couche externe de 15 microns d'épaisseur d'OPEA/un adhésif/une couche de 40 microns de polypropylène pelable par rupture.

Des fourrages éventuellement employés doivent résister à la cuisson (typiquement ils doivent supporter une température de 100°C pendant une durée de 2 à 10 minutes) et leur activité de l'eau (après cuisson et équilibrage) doit être inférieure ou égale à 0,88. On peut ainsi utiliser un fourrage fruits comprenant des morceaux enrichis en fibres, un fourrage chocolat, des morceaux de fruits semi-confits ou bien encore un fourrage salé avec ou sans morceaux de légumes et/ou de fromage.

Grâce à la présence d'une fermeture partielle et de l'utilisation de micro-ondes et éventuellement d'air chaud, le procédé selon l'invention permet d'obtenir des produits céréaliers moelleux pasteurisés de façon homogène à coeur et dans l'ensemble des phases (pâte et fourrage) du produit dans des temps plus courts et avec des valeurs de pasteurisation plus importantes que les cuissons classiques.

La cuisson permet de détruire les microorganismes présents dans les matières premières (micro-organismes thermorésistants) à au moins 80°C pendant 2 ou 3 minutes. Ce procédé permet en fait d'atteindre une température avoisinant 100°C à coeur du produit en moins d'une minute, suivi d'un plateau entre 100 et 105°C pendant 2 à 10 minutes et de préférence 5 minutes alors que la cuisson classique ne permet de dépasser 80°C au coeur du produit qu'après 14 minutes sur 16 minutes du temps total de cuisson, tout en imposant une température de four élevée (130°C environ).

Le procédé permet également de fabriquer des produits céréaliers moelleux sans recontamination microbiologique de surface après cuisson, par les moisissures en particulier. Le premier scellage partiel s'effectue avant cuisson et l'opercule est décontaminé durant la cuisson. Le refroidissement du produit et le scellage final s'effectuent en zone protégée avec air filtré (qualité de l'air de classe 10000 ou meilleur).

Le procédé de pasteurisation selon l'invention permet donc d'envisager des conservations de produits céréaliers humides liés à une activité de l'eau élevée (jusqu'à 0,86 ou 0,87) dans des emballages plastiques jetables sur des durées longues (supérieures à un mois, voire à 3 mois à température ambiante) et sans adjonction de conservateur) ni mise en oeuvre d'autres moyens de pasteurisation tel que rayonnements ionisants, UV, atmosphère modifiée (CO₂, protoxyde d'azote,...).

Une autre variante du procédé présente une première phase de cuisson mettant en oeuvre une combinaison d'un chauffage à micro-ondes et d'une chaleur tournante (air chaud par convection à 130°C), et une deuxième phase qui met en oeuvre successivement pendant 6 à 10 minutes un chauffage uniquement par convection et une phase finale de l'ordre de 2 à 3 minutes avec un seul chauffage par rayonnement infra-rouge. Le produit est refroidi pendant 6 minutes avant de réaliser l'operculage complet.

L'application de micro-ondes en début de cuisson au moins pendant une minute permet de réduire la durée de cuisson globale, et permet si on le souhaite d'obtenir un produit moins bombé et plus levé, ce qui conduit à une structure plus aérée avec de plus grosses alvéoles. En outre, du fait que le chauffage micro-ondes permet d'obtenir rapidement une température suffisante à coeur de produit, la chaleur tournante (air chaud par convection) peut être mise en oeuvre à une température moins importante que l'art antérieur par exemple entre 110°C et 130°C, en particulier entre 120 à 130°C. Ces températures restent donc compatibles en tous les cas avec l'utilisation de barquettes plastiques, notamment en polypropylène qui ne permettent pas de dépasser des températures de four de l'ordre de 130°C.

La présence de l'opercule 77 permet d'obtenir une double résistance au mécanisme de transfert de chaleur et de la matière :
- une résistance au transfert de la vapeur d'eau qui doit forcer le passage à travers au moins un orifice, par exemple de quelques millimètres, réalisé à cet effet, ce qui fait que l'espace de tête 78 de la barquette est saturé en vapeur d'eau limitant considérablement le séchage convectif du produit ;
- une résistance au transfert thermique convectif en annulant l'arrivée de l'air chaud sur la surface 76 du produit 75 et en limitant considérablement le mouvement de l'air dans l'espace de tête 78 de la barquette 7.

On évite ainsi si on le souhaite la formation de croûte superficielle et la cuisson du produit est plus homogène.

Etant donné que l'opercule 77 oppose une forte résistance au transfert thermique, et que pour des raisons de tenue thermique, la température de l'air ne doit pas excéder 130°C, la cuisson et la montée en température du produit prendraient un temps important pour atteindre 80°C à coeur (typiquement 9 minutes) avec une cuisson traditionnelle au four pour des produits en portions individuels. L'apport d'énergie par micro-ondes se faisant directement dans la masse du produit par dégradation thermique de l'énergie électromagnétique, l'application des ondes accélère le séchage du produit. De plus l'espace de tête 78 entre la phase supérieure 76 du produit et l'opercule 77 est rapidement saturé en vapeur d'eau. En outre, l'utilisation de micro-ondes en début de cuisson s'effectue lorsque la barquette est froide, ce qui permet de stopper leur application avant le risque d'apparition d'un emballement thermique du matériau de la barquette 7 et/ou de l'opercule 77. En effet, les propriétés diélectriques des matières plastiques, notamment le polypropylène, varient brutalement au-dessus d'une température, qui est de 90°C pour le propylène, et deviennent fortement dépendantes de la température. Dans le cas du polypropylène chauffé au-dessus de 90°C, le matériau absorbe d'autant plus les ondes électromagnétiques qu'il est chaud, et comme il ne conduit pas bien la chaleur, il y a un risque d'emballement thermique pouvant conduire à la fusion de la barquette.

Un autre avantage de l'application des micro-ondes est que le produit est chauffé dans la masse, ce qui fait que les effets de bord sont limités et que le produit se développe plus ou moins à plat. Dans une cuisson air chaud classique, la périphérie du produit sèche plus rapidement que le coeur, les zones périphériques sont beaucoup plus rigides que les zones centrales qui se déforment davantage d'où la création d'un dôme. Lorsque les micro-ondes sont appliquées en début de cuisson, les bords du produit n'ont pas le temps ni de sécher ni de se rigidifier et le produit amorce un développement à plat ou quasiment à plat.

Les figures 2a à 2c montrent trois types différents de barquettes pouvant être utilisées. Celles-ci présentent un fond 71 à bord latéral 72 évasé ou non et un bord supérieur 73 permettant le scellage de l'opercule 77.

A la figure 3, on a représenté après refroidissement un produit dans lequel l'opercule 77 est sous la forme d'un film qui s'est rétracté au refroidissement sous l'action de la dépression dans l'espace 78, ce qui fait qu'il forme un dôme inversé tournant sa concavité vers l'extérieur. Cette forme permet de tendre la soudure périphérique, en même temps qu'elle sert de témoin d'étanchéité du produit. L'épaisseur de l'espace 78 entre la partie supérieure 76 du produit 75 et l'opercule peut être aussi réduite que possible. Il suffit en effet que la hauteur de l'emballage 7 ait été calculée pour que, lors de la levée, la pâte n'atteigne pas l'opercule 77, ce qui permet un complet développement du produit.

## Revendications

1. Procédé de fabrication d'un produit cuit levé à base au moins d'une céréale, susceptible d'être stocké à température ambiante, procédé dans lequel le produit est cuit dans un emballage (7) formant un moule pour le produit, **caractérisé en ce qu'**il comporte les étapes suivantes :
- disposer un pâton cru en une pâte céréalière dans un moule (7) en un matériau compatible avec un traitement par micro-ondes ;
- disposer sur le moule (7) un opercule (77) compatible avec un chauffage par micro-ondes et au moins partiellement transparent à un rayonnement infra-rouge court et/ou moyen, en réalisant une fermeture partielle du moule (7) permettant un passage de vapeur vers l'extérieur du moule (7) ;
- réaliser une cuisson mettant en oeuvre une phase de début de cuisson avec chauffage micro-ondes éventuellement combiné avec un chauffage par convection et/ou un chauffage infra-rouge court et/ou moyen, une levée de la pâte du pâton étant obtenue au cours de cette phase de début de cuisson qui est telle qu'il subsiste en fin de levée un espace entre une face supérieure (76) du pâton levé (75) et une face inférieure de l'opercule (77), cette phase de début de cuisson étant suivie d'une phase de cuisson comprenant un chauffage par infra-rouge court et/ou moyen et/ou un chauffage par convection ;
- refroidir au moins partiellement le produit et réaliser une fermeture étanche du moule (7).

2. Procédé selon la revendication 1, **caractérisé en ce que**, après cuisson, le produit cuit (75) présente une activité de l'eau comprise entre 0,84 et 0,87.

3. Procédé selon une des revendications 1 ou 2 **caractérisé en ce que** la pâte présente des levures de boulangeries actives et **en ce qu'**elle est pré-étuvée dans le moule partiellement fermé avant ladite cuisson.

4. Procédé selon l'une des revendications 1 à 3, **caractérisé en ce que** le pâton cuit (75) est un produit moelleux, par exemple une génoise, un cake ou un muffin, ou un cake salé.

5. Procédé selon une des revendications précédentes, **caractérisé en ce que** le moule est en matière plastique, avantageusement en polypropylène.

6. Procédé selon une des revendications précédentes, **caractérisé en ce que** la fermeture partielle du moule (7) est réalisée à l'aide d'au moins une ligne de solidarisation périmétrique (74) de l'opercule (77) à un bord pétrimétrique (75) du moule (7), cette ligne de solidarisation (74) présentant au moins une discontinuité (75).

7. Procédé selon la revendication 6, **caractérisé en ce que** la fermeture étanche est réalisée à l'aide d'au moins une ligne de solidarisation périmétrique continue et fermée, solidarisant l'opercule (77) audit bord périmétrique (75) du moule (7).

8. Procédé selon une des revendications précédentes, **caractérisé en ce que** l'opercule (77) est un film formant une barrière à la vapeur d'eau et à l'oxygène, qui est suffisante pour la conservation du produit.

9. Procédé selon la revendication 8, **caractérisé en ce que** le film (77) est pelable.

10. Procédé selon une des revendications 8 ou 9, **caractérisé en ce que** le film (77) présente une épaisseur comprise entre 40µm et 100µm.

11. Procédé selon une des revendications 8 à 10, **caractérisé en ce que** la fermeture étanche est réalisée à une température du produit telle que, après refroidissement à la température ambiante, l'opercule (77) présente une face externe concave.

12. Procédé selon une des revendications précédentes, **caractérisé en ce que** le produit (75) présente au moins un fourrage d'un type résistant à la cuisson ayant après cuisson et stabilisation une activité de l'eau au plus égale à 0,88.

13. Procédé selon une des revendications précédentes, **caractérisé en ce qu'**au cours de la cuisson, le coeur du produit atteint une température au moins égale à 80 °C pendant au moins 2 minutes.

14. Procédé selon la revendication 13, **caractérisé en ce qu'**au cours de la cuisson, le coeur du produit est porté à une température en plateau au moins égale à 100°C, et de préférence comprise entre 100°C et 110°C.

15. Procédé selon la revendication 14, **caractérisé en ce que** cette température en plateau est maintenue pendant 2 à 10 minutes, et de préférence pendant 5 minutes.

16. Procédé selon l'une des revendications 13 à 15 **caractérisé en ce que** la flore bactérienne sporulée (Bacillus Sp) présente dans le produit avant cuisson, subit une réduction de 1,5 à 2 logs.

17. Produit cuit levé à base d'au moins une céréale susceptible d'être stocké à température ambiante pendant au moins un mois, avantageusement au moins deux mois, de préférence au moins 3 mois **caractérisé en ce qu'**il est disposé dans un emballage à base d'une matière plastique compatible avec les micro-ondes, avantageusement du polypropylène formant un moule pour le produit et fermé par un opercule à base d'une matière plastique compatible avec les micro-ondes et/ou les infra-rouges, et **en ce que** le produit cuit présente une activité de l'eau comprise entre 0,82 et 0,87, avantageusement entre 0,84 et 0,87 ou bien entre 0,84 et 0,86.

18. Produit selon la revendication 17 **caractérisé en ce qu'**il présente une distribution régulière du rayon des pores jusqu'à 1,5 mm avec un maximum de densité de distribution des rayons des pores vers 0,2 mm.

## Claims

1. Method for producing a risen baked product which is based on at least one cereal and which is capable of being stored at ambient temperature, in which method the product is baked in a packaging (7) which forms a mould for the product, **characterised in that** it comprises the following steps:
- arranging a raw dough ball of a cereal dough in a mould (7) of a material which is compatible with microwave processing;
- arranging on the mould (7) a lid (77) which is compatible with microwave heating and which is at least partially transparent to short and/or medium infrared radiation, with a partial closure of the mould (7) being brought about which allows vapour to pass to the outer side of the mould (7);
- carrying out a baking operation which involves a baking start phase with microwave heating, optionally combined with heating by means of convection and/or short and/or medium infrared heating, the dough of the dough ball being caused to rise during this baking start phase so that, at the end of the rising operation, there remains a space between an upper face (76) of the risen dough ball (75) and a lower face of the lid (77), this baking start phase being followed by a baking phase which comprises heating by means of short and/or medium infrared radiation and/or heating by means of convection;
- at least partially cooling the product and bringing about a sealed closure of the mould (7).

2. Method according to claim 1, **characterised in that**, after baking, the baked product (75) has a water activity of between 0.84 and 0.87.

3. Method according to either claim 1 or claim 2, **characterised in that** the dough has active baker's yeasts, and **in that** the dough is pre-baked in the partially closed mould before the baking operation.

4. Method according to any one of claims 1 to 3, **characterised in that** the baked dough ball (75) is a soft product, for example, a sponge, a cake or a muffin, or a savoury cake.

5. Method according to any one of the preceding claims, **characterised in that** the mould is of plastics material, advantageously of polypropylene.

6. Method according to any one of the preceding claims, **characterised in that** the partial closure of the mould (7) is brought about using at least one perimeter line (74) for fixedly joining the lid (77) to a perimeter edge (75) of the mould (7), this joining line (74) having at least one discontinuity (75).

7. Method according to claim 6, **characterised in that** the sealed closure is brought about by means of at least one continuous and closed perimeter joining line which fixedly joins the lid (77) to the perimeter edge (75) of the mould (7).

8. Method according to any one of the preceding claims, **characterised in that** the lid (77) is a film which forms a barrier to water vapour and oxygen, which is sufficient to preserve the product.

9. Method according to claim 8, **characterised in that** the film (77) is peelable.

10. Method according to either claim 8 or claim 9, **characterised in that** the film (77) has a thickness of between 40µm and 100µm.

11. Method according to any one of claims 8 to 10, **characterised in that** the sealed closure is brought about at a product temperature such that, after cooling to ambient temperature, the lid (77) has a concave outer face.

12. Method according to any one of the preceding claims, **characterised in that** the product (75) has at least one filling of a type which is resistant to baking and which has, after baking and stabilisation, a water activity of a maximum of 0.88.

13. Method according to any one of the preceding claims, **characterised in that**, during the baking operation, the core of the product reaches a temperature of at least 80°C for at least 2 minutes.

14. Method according to claim 13, **characterised in that**, during the baking operation, the core of the product is brought to a maximum temperature of at least 100°C and preferably between 100°C and 110°C.

15. Method according to claim 14, **characterised in that** this maximum temperature is maintained for from 2 to 10 minutes, and preferably for 5 minutes.

16. Method according to any one of claims 13 to 15, **characterised in that** sporulated bacterial flora (Bacillus sp) present in the product before baking is reduced by from 1.5 to 2 logs.

17. Risen baked product which is based on at least one cereal and which is capable of being stored at ambient temperature for at least one month, advantageously at least two months, preferably at least three months, **characterised in that** it is arranged in a packaging which is based on a plastics material compatible with microwaves, advantageously polypropylene, and which forms a mould for the product and which is closed by means of a lid which is based on a plastics material compatible with microwaves and/or infrared radiation, and **in that** the baked product has a water activity of between 0.82 and 0.87, advantageously between 0.84 and 0.87 or between 0.84 and 0.86.

18. Product according to claim 17, **characterised in that** it has a regular pore radius distribution of up to 1.5 mm with a maximum pore radius distribution density in the order of 0.2 mm.

## Patentansprüche

1. Verfahren zur Herstellung eines gegarten Hefeteigproduktes auf der Grundlage mindestens eines Getreides, das bei Umgebungstemperatur gelagert werden kann, wobei das Produkt in einer Verpackung (7) gegart wird, welche eine Form für das Produkt darstellt, **dadurch gekennzeichnet, daß** das Verfahren die folgenden Schritte aufweist:
- Anordnen eines rohen Teiglings aus einem Getreideteig in einer Form (7) aus einem für eine Mikrowellenbehandlung kompatiblen Material;
- Anordnen auf der Form (7) einer Abdeckung (77), die mit einem Erhitzen mittels Mikrowellen kompatibel und mindestens teilweise für eine kurze und/oder mittlere Infrarotstrahlung transparent ist, wobei ein teilweises Verschließen der Form (7) durchgeführt wird, das einen Durchtritt von Dampf nach außerhalb der Form (7) zuläßt;
- Durchführen eines Garens, das eine Anfangsphase des Garens mit Erhitzen mittels Mikrowellen, gegebenenfalls in Kombination mit einem Erhitzen mittels Konvektion und/oder einem Erhitzen mittels kurzer und/oder mittellanger Infrarotstrahlung anwendet, wobei im Verlauf dieser Anfangsphase des Garens ein solches Aufgehen des Teiges des Teiglings erhalten wird, daß nach Beendigung des Aufgehens ein Freiraum zwischen einer Oberseite (76) des aufgegangenen Teiglings (75) und einer Unterseite der Abdeckung (77) vorliegt, wobei auf diese Anfangsphase des Garens eine Garphase folgt, welche ein Erhitzen mittels kurzer und/oder mittellanger Infrarotstrahlung und/oder ein Erhitzen mittels Konvektion umfaßt;
- zumindest teilweises Kühlen des Produktes und Durchführen eines dichten Verschließens der Form (7).

2. Verfahren nach Anspruch 1, **dadurch gekennzeichnet, daß** das gegarte Produkt (75) nach dem Garen eine Wasseraktivität von zwischen 0,84 und 0,87 aufweist.

3. Verfahren nach einem der Ansprüche 1 oder 2, **dadurch gekennzeichnet, daß** der Teig aktive Backhefen aufweist, und daß er vor dem Garen in der teilweise verschlossenen Form einer Vorbehandlung im Ofen unterzogen wird.

4. Verfahren nach einem der Ansprüche 1 bis 3, **dadurch gekennzeichnet, daß** der gegarte Teigling (75) ein lufthaltiges Produkt wie z.B. ein Biskuit, ein Sandkuchen oder ein Muffin, oder ein gesalzener Keks ist.

5. Verfahren nach einem der vorhergehenden Ansprüche, **dadurch gekennzeichnet, daß** die Form aus einem Plastikmaterial, vorteilhaft Polypropylen, besteht.

6. Verfahren nach einem der vorhergehenden Ansprüche, **dadurch gekennzeichnet, daß** das teilweise Verschließen der Form (7) mit Hilfe mindestens einer Linie (74) zum umfangsmäßigen Verbinden der Abdeckung (77) mit einem Umfangsrand (75) der Form (7) durchgeführt wird, wobei diese Verbindungslinie (74) mindestens eine Unterbrechung (75) aufweist.

7. Verfahren nach Anspruch 6, **dadurch gekennzeichnet, daß** das dichte Verschließen mit Hilfe mindestens einer Linie zum kontinuierlichen und geschlossenen umfangsmäßigen Verbinden durchgeführt wird, welche die Abdeckung (77) mit dem Umfangsrand (75) der Form (7) verbindet.

8. Verfahren nach einem der vorhergehenden Ansprüche, **dadurch gekennzeichnet, daß** die Abdeckung (77) eine Folie ist, die eine für das Aufbewahren des Produktes ausreichende Dampf- und Sauerstoffsperre bildet.

9. Verfahren nach Anspruch 8, **dadurch gekennzeichnet, daß** die Folie (77) abziehbar ist.

10. Verfahren nach einem der Ansprüche 8 oder 9, **dadurch gekennzeichnet, daß** die Folie (77) eine Dicke von zwischen 40 µm und 100 µm besitzt.

11. Verfahren nach einem der Ansprüche 8 bis 10, **dadurch gekennzeichnet, daß** das dichte Verschließen bei einer solchen Temperatur des Produktes durchgeführt wird, daß die Abdeckung (77) nach dem Abkühlen auf die Umgebungstemperatur eine nach innen hin gewölbte Außenseite aufweist.

12. Verfahren nach einem der vorhergehenden Ansprüche, **dadurch gekennzeichnet, daß** das Produkt (75) mindestens eine Füllung von einem Typ aufweist, der gegen das Garen widerstandsfähig ist sowie nach Garen und Stabilisierung eine Wasseraktivität von höchstens gleich 0,88 aufweist.

13. Verfahren nach einem der vorhergehenden Ansprüche, **dadurch gekennzeichnet, daß** das Innere des Produktes im Verlauf des Garens während mindestens 2 Minuten eine Temperatur von mindestens gleich 80°C erreicht.

14. Verfahren nach Anspruch 13, **dadurch gekennzeichnet, daß** im Verlauf des Garens das Innere des Produktes auf eine gleichbleibende Temperatur von mindestens gleich 100°C und vorzugsweise von zwischen 100°C und 110°C gebracht wird.

15. Verfahren nach Anspruch 14, **dadurch gekennzeichnet, daß** diese gleichbleibende Temperatur während 2 bis 10 Minuten, und vorzugsweise während 5 Minuten beibehalten wird.

16. Verfahren nach einem der Ansprüche 13 bis 15, **dadurch gekennzeichnet, daß** die vor dem Garen in dem Produkt vorhandene, sporenbildende Bakterienflora (Bacillus Sp) eine Abnahme von 1,5 bis 2 Log erfährt.

17. Gegartes Hefeteigprodukt auf der Grundlage mindestens eines Getreides, das bei Umgebungstemperatur während mindestens eines Monats, vorteilhaft mindestens zwei Monaten, bevorzugt mindestens 3 Monaten gelagert werden kann, **dadurch gekennzeichnet, daß** es in einer Verpackung auf der Grundlage eines Plastikmaterials angeordnet ist, die mit Mikrowellen kompatibel ist, vorteilhaft Polypropylen, und die eine Form für das Produkt darstellt und mit einer Abdeckung auf der Grundlage eines Plastikmaterials verschlossen ist, welche mit Mikrowellen und/oder Infrarotstrahlung kompatibel ist, und daß das gegarte Produkt eine Wasseraktivität von zwischen 0,82 und 0,87, vorteilhaft zwischen 0,84 und 0,87 oder sogar zwischen 0,84 und 0,86 besitzt.

18. Produkt nach Anspruch 17, **dadurch gekennzeichnet, daß** es eine gleichmäßige Verteilung des Radius der Poren bis 1,5 mm mit einem Maximum der Verteilungsdichte der Porenradien gegen 0,2 mm aufweist.
